(19) Europäisches Patentamt
European Patent Office
Office européen des brevets

(11) Publication number: **0 084 771**
**A2**

(12) # EUROPEAN PATENT APPLICATION

(21) Application number: 83100031.0

(22) Date of filing: 04.01.83

(51) Int. Cl.³: C 09 D 3/48, C 08 L 63/00, C 08 L 27/02, C 08 K 3/20

(30) Priority: 22.01.82 US 341438

(43) Date of publication of application: 03.08.83 Bulletin 83/31

(84) Designated Contracting States: DE FR GB IT

(71) Applicant: ALLIED CORPORATION, Columbia Road and Park Avenue P.O. Box 2245R (Law Dept.), Morristown New Jersey 07960 (US)

(72) Inventor: Minhas, Pritam Singh, 5 Deerfield Road, Mendham New Jersey 07945 (US)
Inventor: Miller, Albert, 1246 Evergreen Drive, Bridgewater New Jersey 08807 (US)

(74) Representative: Baillie, Iain Cameron et al, c/o Ladas & Parry Isartorplatz 5, D-8000 München 2 (DE)

(54) **Method of making a powdered primer coating composition.**

(57) A method of making a powder coating composition. A powdered halogenated copolymer selected from ethylene chlorotrifluoroethylene copolymer and ethylene tetrafluoroethylene copolymer is mixed with a powdered epoxy and optionally a powdered metal oxide. Preferably, the mixing is conducted at ambient temperature and pressure.

EP 0 084 771 A2

## DESCRIPTION

## METHOD OF MAKING A POWDERED PRIMER COATING COMPOSITION

## BACKGROUND OF THE INVENTION

### 1. Field of the Invention

This invention relates to fluoropolymer primer compositions useful for coating substrates; and more particularly to a method of making a powdered primer coating composition.

### 2. Description of the Prior Art

Copolymers of about 40 to about 60 mol percent ethylene and correspondingly from about 60 to about 40 mol percent of chlorotrifluoroethylene, tetrafluoroethylene and mixtures thereof, are known in the art as disclosed, for example, in Mueller et al. U.S. Pat. No. 3,847,881, issued Nov. 12, 1974. As described therein, such copolymers may contain 3,3,3-trifluoro-2-trifluoromethyl propene to improve their stress-crack resistance. Also, as described in Carlson U.S. Pat. No. 3,624,250 issued Nov. 30, 1971, such copolymers may contain certain vinyl monomers in order to improve their stress-crack resistance. Such copolymers are useful for coating articles by powder coating techniques. However, it has been found that the adhesion between such copolymer coatings and the underlying substrate, particularly in the case of metal substrates, is too weak for certain applications, especially those wherein a severe environment is encountered. U.S. Pat. No. 3,989,873 describes primer coatings for such copolymers which include about 1 to 40 percent by weight of an oxide of cobalt, nickel,

manganese, chromium, tin, molybdenum, tungsten or mixtures thereof. The disclosure of such patent is expressly incorporated herein by reference.

U.S. Patent 4,098,756, issued July 4, 1978, describes a primer coating composition comprising a copolymer of ethylene and a halogenated comonomer, from 5 to 60 percent by weight of the total composition of an epoxy resin, and about 1 to 25 percent by weight of the total composition of an oxide of cobalt, nickel, manganese, tungsten or mixtures. This patent indicates that the composition is preferably in powder form for use in powder coating techniques. However, this patent indicates that a method for making the composition comprises the steps of blending an emulsion of the epoxy, or a solvent containing the epoxy with copolymer pellets or powder. The solvent is removed by vacuum or evaporation. Thereafter the metal oxide is blended into the mixture. If necessary the final mixture may be milled to the desired size.

The process to remove solvents presents important environmental concerns since the solvents used are organic solvents including ketones such as methyl ethyl ketone. Further, the removal of the liquids even under the influence of a vacuum is a slow process. No more than a gentle amount of heat can be used or the epoxy resin will prematurely begin to react. The use of a liquid epoxy or epoxy in a liquid generally necessitates the additional step of forming the composition to the desired particle size. This is due to caking of the composition.

## SUMMARY OF THE INVENTION

The present invention is a method of making a powder coating composition. This method is to mix powdered epoxy and powdered copolymer of a halogenated comonomer. The copolymer is a copolymer of ethylene, a halogenated comonomer selected from the group consisting of tetrafluoroethylene, chlorotrifluoroethylene and mixtures thereof, and 0 to 10 mol

percent of an additional monomer selected from the group consisting of 3,3,3-trifluoro-2-trifluoromethyl propene, a vinyl monomer which is free of telogenic activity and which provides a side chain being aromatic or having its elements bonded together by a single bond only, or mixtures thereof. There is from 10 to 90, preferably 20 to 60, and more preferably 25 to 50 percent of the epoxy based on the weight of the copolymer. A preferred epoxy is epoxy cresol novolac resin.

Optionally, a powdered oxide of metal from the group consisting of cobalt, nickel, manganese, tungsten, and mixtures thereof can be mixed with the powdered copolymer and the powdered epoxy.

The process of the present invention has several advantages over the processes disclosed in the prior art. The process does not require the step of removal of the liquid carrier, either solvent or emulsion fluids. The process does not require that the mixture be formed, i.e. milled, to the desired size.

## DESCRIPTION OF THE PREFERRED EMBODIMENTS

The present invention is a method of making a powdered composition comprising the step of mixing a powdered copolymer of ethylene and a halogenated comonomer, and a powdered epoxy (including curing agent). Optionally, the powdered oxide of metals, including cobalt, nickel, manganese, tungsten, or mixtures thereof, can be mixed with the powdered copolymer and the powdered epoxy. The copolymers and epoxy are in powdered form. The particle size range of the copolymers and epoxy should be compatible with powder coating methods and equipment as described below. Preferred copolymer and epoxy powder particle size is from about 0.1 to about 1000, preferably from 20 to 300 micrometers. The metal oxides are of the type disclosed in US Patent No. 3,989,873 hereby incorporated by reference. The preferred particle size range of the metal oxide is less than about 200 micrometers, and preferably from 0.1 to 200 micrometers.

The mixing of the copolymer, epoxy and optional metal oxides preferably takes place at temperatures and pressures which do not initiate melting of the polymer or premature reaction of the epoxy. Preferably, the mixing takes place at from 70°F (21°C) to 100°F (38°C) and more preferably at ambient temperature and atmospheric pressure. The mixing means equipment may be a ribbon blender, Henschel mixer, V-cone mixer, etc.

The powdered copolymer and epoxy are physically mixed together. Optionally, the metal oxide can be physically mixed with the copolymer and the epoxy. Alternately, the powdered metal oxide can be preblended by a method such as melt compounding, with the copolymer, or with the epoxy, to form a metal oxide containing powder. Powder containing metal oxide and epoxy is mixed with the copolymer powder. Powder containing metal oxide and copolymer is mixed with the epoxy powder.

Alternatively, an epoxy powder containing the curing agent can be mixed with the halogenated polymer pellets or powder on a kneader and heated to a sufficient temperature to melt the epoxy composition but without causing any significant curing reaction. It is unimportant if the halogenated polymer is melted or not. The lumps of this mixture can then broken up and ground to a suitable particle size.

As stated above, the copolymers of the present invention are known and may be prepared by known polymerization methods, such as are described in the aforesaid Mueller et al. and Carlson patents. The disclosure of both patents are specifically incorporated herein. The copolymers can contain from 30 to 70 mol percent of ethylene, and 70 to 30 mol percent chlorotrifluoroethylene. Preferably, the copolymers contain from about 40 to about 60 mol percent of ethylene, from about 60 to about 40 mol percent of chlorotrifluoroethylene, tetrefluoroethylene or mixtures thereof. There can be 0 to 10 mol percent of an additional monomer selected

from the group consisting of 3,3,3-trifluoro-2-trifluoro-2-trifluoromethyl propene, a vinyl monomer which is free of telogenic activity and which provides a side chain having at least two carbon atoms, said side chain being aromatic or having its elements bonded together by a single bond only, or mixtures thereof. About equimolar copolymers of ethylene and chlorotrifluoroethylene or tetrafluoroethylene are particularly preferred.

The termonomers disclosed in Mueller et al. (i.e., 3,3,3-trifluoro-2-trifluoromethyl propene) and in Carlson (i.e., vinyl monomers) may optionally be present in the copolymer. Amounts of about 0.1 to about 10 mol percent, based on the total mols of the other monomers, may be employed. Preferably, about 0.5 to about 5 mol percent of such additional monomers are employed.

The monomers disclosed in Carlson are copolymerizable vinyl monomers that are free of telogenic activity and which provide a side chain having at least two carbon atoms and being either aromatic or having its elements bonded together only by single bonds. By "free of telogenic activity" is meant that the vinyl monomer does not act as a chain transfer agent to an extent which undesirably limits the molecular weight of the copolymer. Examples of such vinyl monomers include fluorinated alpha-monoolefins and those of the following formulae:

$R - CF = CF_2$; $ROCF = CF_2$;

$CF_3(CF_2)_mCH_2OCF = CF_2$; $CH_3(CH_2)_nOCF = CF_2$;

$R'CH_2(X) = CH_2$ and $R^2OCH_2C(X) = CH_2$;

wherein R is an organic group containing 2 to 8 carbon atoms, R' is a perfluorinated or chlorofluoroalkyl group of 1 to 7 carbon atoms or a secondary or tertiary haloalcohol group, $R^2$ is a perfluorinated or chlorofluoroalkyl of 1 to 7 carbon atoms, X is H or CH, m is an integer of 0 to 6 and n is an integer of 1 to 7. Especially preferred vinyl monomers are perfluoropropyl

perfluorovinyl ether, 1,1,1-trifluoro-2-(trifluoromethyl)-4-penten-2-ol and allyl heptafluoroisopropyl ether.

Preferred copolymers are those containing from about 40 to about 60 mol percent of ethylene and from about 60 to about 40 mol percent chlorotrifluoroethylene, especially about equimolar copolymers of such comonomers, as well as copolymers of ethylene and chlorotrifluoroethylene of the aforesaid mol content (and especially about an equimolar content) together with about 0.5 to 5 mol percent of 3,3,3-trifluoro-2-trifluoromethyl propene, and copolymers of ethylene and tetrafluoroethylene of the aforesaid mol content (and especially about an equimolar content) together with about 0.5 to 5 mol percent of perfluoropropyl perfluorovinyl ether.

The copolymers and terpolymers may include a high molecular weight fraction as is disclosed in copending U.S. applications Ser. Nos. 564,232 filed April 2, 1975 and 649,936 filed January 19, 1976, the disclosures of which are expressly incorporated herein by reference. For example, the copolymers and terpolymers may contain about 0.5 to 60 weight percent of a high molecular weight component which has a melt index per ASTM D-1238 at 275°C of about 0.0001 to 1.0, preferably about 0.005 to 0.5, and about 99.5 to 40 weight percent of a low molecular weight component which has a melt index of about 3 to 3000, preferably about 5 to 1000.

The copolymer primer composition made by the process of the present invention comprises from 10 to 90 percent, preferably from 20 to 60 percent, and more preferably from 25 to 50 percent of the epoxy based on the weight of the copolymer. The epoxy is a stable solid at ambient temperature and atmospheric pressure, and can be in the form of a powder having the stated particle size limitation. The term epoxy as used herein includes "uncured" or uncrosslinked epoxy and curing

agent and/or hardeners. The epoxy should be able to withstand the copolymer processing temperatures, discussed below, without premature crosslinking or degradation to the extent adhesion between the copolymer and a substrate is not reduced. The epoxy preferably should be able to withstand temperatures up to about 400°C without premature crosslinking or degradation.

The epoxy resins useful herein may be any of the known adhesive epoxy resins meeting the above criteria. Such resins may be prepared by the condensation of epoxy compounds, such as epichlorohydrin and glycerol dichlorohydrin, with polyhydric orgainic compounds such as alcohols, e.g., pentaerythritol; dihydric alcohols, e.g., glycerol; dihydric phenols, e.g., bisphenol A; and trihydric phenols. For example, epoxy resins prepared by the condensation of bisphenol A and epichlorohydrin may be employed. Other types of epoxy resins include diglycidyl ether of bisphenol A, the epoxidized novolac resins such as epoxy cresol novolac and epoxy phenol novolac. Still other epoxy resins include the cycloaliphatic resins in which the epoxide groups are attached directly to the cycloaliphatic portions of the molecule rather than on the alkyl chain. The preferred epoxies cure or crosslink at above 400°F (204°C), more preferably 400°F (204°C) to 800°F (417°C), and most preferably 500°F (260°C) to 700°C (371°C). Preferred epoxies include epoxy cresol novolac and epoxy phenol novolac resins.

The above epoxy resins include hardeners and/or accelerators which permit their curing at elevated temperature. Such catalysts include Lewis bases such as tertiary amines (e.g., benzyldimethylamine) and imidazoles, and Lewis bases such as boron trifluoride complexes with monoethylamine. Hardeners (cross-linking agents) include primary and secondary amines (e.g., diethylene tramine and triethylene tetramine), polyamides, polyesters carboxylic acids, anhydrides (such as

maleic anhydride), phenolic compounds and alcohols. The concentraion of such additives may vary widely depending upon the desired properties in the cured material.

The copolymer primer compositions can also include from about 1 to 25 weight percent, preferably from about 5 to 15 weight percent, of an oxide of cobalt, nickel, manganese, tungsten or mixtures thereof. Cobalt oxide is preferred and is employed in the form of cobaltic oxide ($Co_2O_3$), although cobaltous oxide (CoO) and cobalto-cobaltic oxide ($Co_3O_4$) may also be used as well as mixtures of any two or more forms of cobalt oxide. The cobalt and other oxides are preferably employed in powder form.

The powdered copolymer primer compositions made by the method of the present invention are useful in any of the well-known powder coating techniques to coat the compositions onto the substrate. These techniques include electrostatic deposition and fluidized bed and similar techiques. Powder coating techniques which are useful are discussed in Modern Plastics Encyclopedia, Vol. 56, No. 10A, "Powder Coating" pp. 250-251, hereby incorporated by reference. It is preferred to use an electrostatic deposition coating process. This process provides initial adherence of a powder composition to a substrate and the substrate is thereafter subjected to a heat treatment above the melting point of the powder to fuse or coalesce ("flow out") the particles of the powder into a continuous layer. The substrate is heated to between 400°F (204°C) and 800°F (427°C), preferably 400°F (204°C) to 700°F (317°C) in the initial adherence step. In the next step the adhered powder flows out or fuses together to form a coherent integrated layer. The flow out temperature is the temperature in the environment where the coating on the substrate flows out. In forming the coated articles of this invention, it is preferred to employ flow out temperatures in the range

of about 400°F (204°C) to 700°F (371°C), preferably about 500°F (260°C) to 550°F (288°) for copolymers based on ethylene and chlorotrifluoroethylene and about 450°F (232°C) to 800°F (427°C) preferably about 575°F (302°C) to 650°F (343°C) for copolymers based on ethylene and tetrafluoroethylene or mixtures with chlorotrifluoroethylene. The duration of this heating step is dependent upon a number of factors, including the temperature employed, the coating thickness, the type of substrate, etc. In general, flow out times may be in the order of 1 or 2 minutes to 1 or 2 hours or more. Upon exposure to the elevated temperature, the epoxy resin crosslinks to provide firm adhesion to the substrate.

After a continuous primer coating is formed over the substrate, a layer of particles of the outer coating may be likewise deposited on the primer coating and then heated to flow out such particles into a continuous coating which is fused to the surface of the primer layer. The composition used to form the outer coating obviously need not include the epoxy resin or the cobalt oxide. Preferably, the copolymer used in the primer and outer coatings is the same. In certain cases, it may be desirable to omit the outer coating. Alternatively, the outer layer may be deposited on the primer layer before the latter is flowed out, so that only one flow out step need be employed.

The primer composition and the other copolymer composition may include any of the conventional additives usually incorporated into such copolymer compositions. Such additives include inert fillers, stabilizers, pigments, reinforcing agents, lubricants and the like. For example, the four component stabilizing system described in U.S. Pat. No. 3,773,698 to Khattab (1973), or the three component stabilizing system described in U.S. Pat no. 3,745,145 to Khattab et al. (1973), for about equimolar ethylenechlorotrifluoroethylene copolymer compositions may be employed herein.

The various substrates capable of being coated in accordance with this invention include, for example, a metal surface such as surfaces of steel, aluminum, iron, zinc, cadmium, magnesium, brass, bronze, Monel, Inconel, fabrics that will withstand the baking temperatures required, such as fiber glass fabrics, asbestos fabrics, metal fabrics and the like, as well as glass and any plastic surface which will withstand high temperatures required(herein without degrading. Examples of such plastic surfaces include thermosetting resins, polyurethanes, silicones, fluoroelastomers and the like.

The type of metal or other material employed as the base layer is not critical and is dictated by the desired end use of the coated article. Especially preferred substrates are those formed of brass, bronze, aluminum, stainless steel and carbon steel. Likewise, the thickness of the substrate is not critical and is dependent upon design factors.

It is preferred to pretreat metal substrates prior to coating with the primer layer to obtain a roughened surface in order to achieve a stronger adherence of the primer coating to the substrate. Any suitable surface treatment can be employed for this purpose such as sand or grit blasting, etching, etc.

The coating itself may be deposited upon the substrate in any desired thickness. In forming thick coatings, it may be desirable to employ a plurality of thin layers in order to improve the uniformity and integrity of the coating. This, of course, requires additional exposure of the underlying coatings to high temperatures, and for this reason it is preferred to include stabilizing agents in the coating compositions.

Substrates which are coated according to this invention have coated surfaces which are continuous and pinhole-free. The coatings may be empolyed as protective as well as antistick surfaces. Exemplary of articles which may be coated include wire and cable,

cookware, industrial tubing, pipes, pumps and tanks, and drier rollers as well as other articles which require coatings having high strength at elevated temperatures, resistance to chemical attack, good electrical insulating properties, non-sticking surfaces, abrasion and scratch resistance and firm adherence of the coating.

The coated articles of this invention preferably include the substrate, a layer of the primer composition of the thickness of about 0.1 mils (0.00254 mm) to 20 mils (0.508 mm) preferably about 0.5 mils (0.0127 mm) to 10 mils (0.254 mm), and more preferably 2 mils (0.0508 mm) to 4 mils (0.1016 mm), and an overlying layer of the copolymer composition having a thickness of about 0.5 mils (0.0127 mm) to 500 mils (12.7 mm) preferably about 3 mils (0.0762 mm) to 50 mils (1.27 mm).

The method of the present invention provides a composition useful as a first primer layer of two primer layers disclosed in U.S. Patent No. 2,979,418 to Dipner (1961). This patent suggests a primer system for such perfluorohaloolefin polymers including a first primer layer comprising the polymer and an adhesive resin such as an epoxy and/or phenolic resin and a second primer layer which includes the polymer and a metal oxide of a metal above the fourth group of the periodic table, such as cobalt oxide. More preferably, the method of the present invention provides a composition containing a metal oxide and is useful as a single layer primer as disclosed in U.S. Patent No. 4,098,756.

In order to further describe the present invention, the following non-limited examples are given.

Example 1

A powdered primer coating composition was made of a powder coating grade epoxy composition containing a curing agent (epoxy) and a copolymer of ethylene and chlorotrifluoroethylene (ECTFE). The epoxy and the ECTFE copolymer were mixed in equal parts by

weight in a ball mill which rotated for about ten hours at ambient temperature and atmospheric pressure. The epoxy and curing agent used was a finely divided powder. It was an epoxy cresol novolac resin with the curing agent being dicyandiamide. The ECTFE copolymer had equimolar amounts of ethylene and chlorotrifluoroethylene. The melt index was 7.4g/ 10 minutes as measured on ASTM D1238 at a load of 216g, run at 255°C. The particle size was 70 micrometers. Mild steel plates (8" (20.32 cm) x 8" (20.32 cm) x 1/4" (0.635 cm)) were cleaned, grit blasted to roughen the surfaces, wiped clean with trichloroethylene and heated for 30 minutes in an air circulating oven maintained at 650°F (343°C). The plates were removed to a coating booth and coated while still hot, with the above composition using an electrostatic powder coating gun. The coated plates were placed for 8 minutes in another air circulating oven maintained at 550°F (288°C). This was sufficient for a 0.75 mil (0.01905 mm) coating to flow out evenly. The plates were allowed to cool down to room temperature. Several plates were overcoated with an equimolar copolymer of ethylene and chlorotrifluoroethylene described above, to a total of 4.5 mil (0.1143 mm) coating while still hot. Two plates had an additional overcoat using the same procedure as the first overcoat. Each overcoat was "flowed out" at 550°F (288°C) for 8 minutes before applying the subsequent overcoat.

When the plates had cooled down to room temperature, coatings were examined for adhesion by applying deep cuts with a sharp knife. The coatings of primer alone, or of overcoated primer could not be lifted off. Adhesion between the metal and the primer and between the primer and overcoats was very good. Coated plates were clamped in an apparatus wherein the coating was exposed to 50 psi (344.7 kPa) steam for varying lengths of time. The plates having only the primer composition made by the method were exposed for up to 96 hours with no adverse effect. After 96 hours a

sharp knife was used to score the coating. After additional 48 hours of exposure, no effect on unscored portion and no lifting of primer occurred along the score lines. The plates having the primer and overcoats were exposed for up to 96 hours with no adverse effect. Adhesion of primer to metal and overcoat to primer was excellent.

Example 2

A powdered primer composition was made according to the method of Example 1. A powdered epoxy, containing a curing agent, sold by Ferro Corporation under code number JH677-2D was blended with the same ECTFE copolymer used in Example 1. This epoxy is a multifunction epoxy made by reacting methylene dianiline with epichlorohydrin.

Steel plates (8" (20.32 cm) x 8" (20.32 cm) x 1/4" (0.635 cm)) were coated with a 0.75 mil (0.01905 mm) layer of a primer of the above composition. Some of the primer coated plates were overcoated with a 6 mil (0.1524 mm) layer of the same ECTFE copolymer overcoating and by the method and under the conditions explained in Example 1. Plates coated with primer alone and primer plus overcoat were exposed to 50 psi (344.7 kPa) steam. After 24 hours of exposure, 10-12 small blisters appeared in each exposed plate. Otherwise the coating looked good. Blister size increased (but not the numbers) lifting of primer from metal around the blisters with continuing exposure up to 96 hours.

Example 3

A powdered primer coating was prepared by mixing 50 parts by weight of the powdered ECTFE copolymer described in Example 1, 25 parts by weight of the of the powdered epoxy described in Example 1, and 25 parts by weight of the copolymer of ethylene and tetrafluoroethylene (ETFE). The ETFE had a melting point of 522-524°F (272°C-273°C), a specific gravity of 1.70 and is manufactured by the DuPont Company under the trademark TEFZEL. The composition was mixed in the same

manner as in Example 1.

This primer was used to coat steel plates using the method of Example 1. The primer on the plates had a thickness of 1.5 mils (0.0381 mm). The primed plates were overcoated twice with the same type of ECTFE copolymer overcoating and in the same manner as in Example 1. The steel plates were exposed to 50 psi (344.7 kPa) steam for up to 192 hours of exposure with no adverse effect. There was no change in color or lifting of the coating. The coating was scored and re-exposed for additional hours after which coating completely lifted off. There was little primer on the metal and adhesion between primer and overcoat was good.

Example 4

A powdered primer composition was prepared by mixing 45 parts by weight of the powdered ECTFE copolymer described in Example 1, 35 parts by weight of the powdered epoxy described in Example 1 and 5 parts by weight of cobaltic oxide. The cobaltic oxide was 200 mesh, that is 99% passed through a 200 mesh screen (74 micrometers). This composition was mixed in the same manner as in Example 1.

This primer was used to coat steel plates using the method as in Example 1, with a 1.5 mil (0.0381 mm) layer. Some of the plates were overcoated twice with the same type of ECTFE overcoating and in the same manner as in Example 1. The steel plates were exposed to 50 psi (344.7 kPa) steam for up to 192 hours of exposure with no adverse effect. There were no blisters or lumps. The coating was scored with a heavy knife and re-exposed to steam. After additional 96 hours of exposure no effect on coating excellent adhesion, no lifting of the coating along the score lines for the primed only and overcoated samples.

Example 5

A powdered primer coating composition was made containing equal parts by weight of the same type of epoxy and ECTFE copolymer as described in Example 1 and

5 parts by weight of chromium oxide. The composition was mixed in a jar containing several ceramic balls on a ball mill for 16 to 20 hours.

The composition was coated onto a steel plate in the same manner as in Example 1. The primed plate was overcoated with ECTFE overcoat in the same manner as in Example 1. The steel plate was cooled to room temperature and exposed to 50 psi steam for 72 hours. The coating had good appearance with no blisters, bubbles or other failure.

Example 6

Example 1 was repeated using aluminum plates, with similar results.

While exemplary embodiments of the invention have been described, the true scope of the invention is to be determined from the following claims.

What is claimed is:

1. A method of making a powdered primer coating composition comprising the step of mixing a powdered epoxy and a powdered copolymer of a halogenated comonomer, wherein the copolymer comprises ethylene, a halogenated comonomer selected from the group consisting of tetrafluoroethylene, chlorotrifluoroethylene and mixtures thereof and 0 to 10 mol percent of an additional monomer selected from the group consisting of 3,3,3-trifluoro-2-trifluoromethyl propene, a vinyl monomer which is free of telogenic activity and which provides a side chain having at least two carbon atoms, said side chain being aromatic or having its elements bonded together by a single bond only, or mixtures bonded together by a single bond only, or mixtures thereof.

2. The method as recited in claim 1 wherein there is from 10 to 90 percent of the epoxy based on the weight of the copolymer.

3. The method as recited in claims 1 further comprising mixing from 1 to 25 percent of the composition of a powdered oxide of a metal from the group consisting of cobalt, nickel, manganese, tungsten and mixtures thereof with the epoxy and the copolymer.

4. The method as recited in claim 3 wherein the step of mixing the powdered metal oxide further comprises blending the powdered metal oxide with the epoxy, and forming a powder of the epoxy and metal oxide blend, and then mixing the powder of the epoxy and metal oxide with the powdered copolymer.

5. The method as recited in claim 3 wherein the step of mixing the powdered metal oxide further comprises preblending the powdered metal oxide with the copolymer, and forming a powder of the copolymer and metal oxide blend, and then mixing the powder of the copolymer and metal oxide with the powdered epoxy.

6. The method as recited in claim 1 wherein the mixing is for from 0.5 to 24 hours.

7. A method in accordance with claim 1 wherein said copolymer comprises from about 0.1 to about 10 mol percent of 3,3,3-trifluoro-2-trifluoromethyl propene.

8. A method of making a powdered primer coating composition comprising the steps of mixing a powdered epoxy and a powdered copolymer of a halogenated comonomer wherein the copolymer comprises ethylene, a halogenated comonomer selected from the group consisting of tetrafluoroethylene, chlorotrifluoroethylene and mixtures thereof and 0 to 10 mol percent of an additional monomer selected from the group consisting of 3,3,3-trifluoro-2-trifluoromethyl propene, a vinyl monomer which is free of telogenic activity and which provides a side chain having at least two carbon atoms, said side chain being aromatic or having its elements bonded together by a single bond only or mixtures thereof, and maintaining the temperature at ambient conditions and the pressure at atmospheric pressure.

9. A method of making a powdered primer coating composition comprising the steps of mixing an epoxy and a copolymer of a halogenated comonomer wherein the copolymer comprises ethylene, a halogenated comonomer selected from the group consisting of tetrafluoroethylene, chlorotrifluoroethylene and mixtures thereof and 0 to 10 mol percent of an additional monomer selected from the group consisting of 3,3,3-trifluoro-2-trifluoromethyl propene, a vinyl monomer which is free of telogenic activity and which provides a side chain having at least two carbon atoms, said side chain being aromatic or having its elements bonded together by a single bond only, or mixtures thereof and heating the composition to a sufficient temperature to melt the epoxy but not cause the epoxy to cure.

10. The method in claim 9 further comprising the step of grinding the composition to form a powder.